# EUROPÄISCHE PATENTANMELDUNG

(11) **EP 0 775 925 A2**
(43) Veröffentlichungstag der Anmeldung: **28.05.1997**
(21) Anmeldenummer: 97100827.1
(22) Anmeldetag: 08.03.1994
(51) Int. Cl.: G02B 6/38

(54) **Steckverbinder**

(30) Priorität: 10.04.1993 DE 4311915; 10.04.1993 DE 4311913; 10.04.1993 DE 4311912
(62) Teilanmeldung aus: 94103081.9
(71) Anmelder: KABEL RHEYDT Aktiengesellschaft, D-41238 Mönchengladbach (DE)
(72) Erfinder: Rohrmann,Peter,Dipl.-Ing., 41063 Mönchengladbach (DE); Weiss,Alexander,Dr., 41066 Mönchengladbach (DE); Hög,Georg,Dipl.-Ing., 41065 Mönchengladbach (DE); Zamzow,Peter,Dipl.-Ing., 44795 Bochum (DE)
(74) Vertreter: Mende, Dirk

(57) **Zusammenfassung**

Ein Steckverbinder (16) zum Konfektionieren eines einen rohrförmigen Innenleiter (2; 9) mit zumindest einer in dem Innenleiter angeordneten optischen Faser (13) und einen rohrförmigen Außenleiter (3; 10) aufweisenden koaxialen Hochfrequenzkabels (1; 8) hat einen sich konzentrisch zu einer Steckerlängsachse (18) erstreckenden Steckstift (19), eine diesen in radialer Richtung mit Abstand und in axialer Richtung zumindest teilweise umgebende Steckbuchse (23) und eine mit der Steckbuchse verbundene Spannhülse (31) zum Halten des Steckverbinders an einem Ende des Hochfrequenzkabels. In dem Steckverbinder (16) ist ein Führungskanal (48) zum Herausführen zumindest einer in dem rohrförmigen Innenleiter (2; 9) angeordneten optischen Faser (13) vorgesehen ist. Der Führungskanal (48) ist ausgehend von dem Steckstift (19) gegenüber der Steckerlängsachse (18) in der Spannhülse (31) abgewandter Richtung schräg nach außen geneigt.

## Beschreibung

Die vorliegende Erfindung betrifft einen Steckverbinder zum Konfektionieren eines einen rohrförmigen metallischen Innenleiter mit zumindest einer in dem Innenleiter angeordneten optischen Faser und einen rohrförmigen metallischen Außenleiter aufweisenden koaxialen Hochfrequenzkabels, der einen sich konzentrisch zu einer Steckerlängsachse erstreckenden Steckstift, eine diesen in radialer Richtung mit Abstand und in axialer Richtung zumindest teilweise umgebende Steckbuchse und eine mit der Steckbuchse verbundene Spannhülse zum Halten des Steckverbinders an einem Ende des Hochfrequenzkabels aufweist.

Zur Übertragung hochfrequenter Energie werden koaxiale Hochfrequenzkabel verwendet, die sich je nach Höhe der zu übertragenden Leistung insbesondere durch ihre äußeren Abmessungen und die Ausbildung der Isolierung zwischen dem Innen- und dem Außenleiter unterscheiden. Gemeinsam ist ihnen jedoch die konzentrische Ausführung sowie die Energieübertragung durch elektrische Strompfade. Mit dem Einzug optischer Übertragungselemente in die Technik hat man bereits in einigen Fällen damit begonnen, elektrischen Übertragungsstrecken optische Datenübertragungselemente parallelzuschalten, sei es um die hiermit zu übermittelnden Daten für Steuer- oder Regelzwecke einzusetzen oder Schaltvorgänge herbeizuführen, sei es um mit Hilfe des optischen Parallelweges in Form einer Sensorleitung Veränderungen in der Umgebung des Kabels aufzunehmen und entsprechende Signale an eine zentrale Stelle weiterzugeben mit dem Ziel einer Überwachung des jeweiligen Betriebszustandes, z. B. der Betriebstemperatur eines erdverlegten Hochspannungskabels.

In solchen Fällen werden z. B. Lichtwellenleiter in die Verseilzwickel elektrischer Kabel eingelegt, oder ein Draht der elektrischen Abschirmung eines Hochspannungskabels wird durch ein Lichtwellenleiterelement ersetzt, oder wie im Falle von Freileitungen bereits angewandt, wird ein Lichtwellenleiterelement mit den einzelnen Drähten des Leiterseiles verseilt. Diese Ein- und Verseilung der Lichtwellenleiterelemente in den Schichtenaufbau elektrischer Kabel dient u. a. dem Zweck, dem Lichtwellenleiterelement eine Überlänge mitzugeben, so daß Zugbeanspruchungen, die während der Herstellung des elektrischen Kabels sowie der Verlegung am Montageort auftreten, nicht zu einem Bruch der optischen Faser führen.

Von solchen elektrischen Energiekabeln unterscheiden sich koaxiale Hochfrequenzkabel schon allein durch ihren mechanischen Aufbau. Außerdem muß gewährleistet sein, daß durch zusätzliche Maßnahmen die elektrischen Übertragungseigenschaften des koaxialen Hochfrequenzkabels bei den jeweiligen Betriebsfrequenzen nicht negativ beeinflußt werden.

Bei abstrahlenden koaxialen Hochfrequenzkabeln, die auch als Leckkabel bezeichnet werden, sind längs des Kabels Öffnungen im Außenleiter angeordnet, z. B. in Form von Schlitzen, die der Abstrahlung der an einem Kabelende eingeführten Energie in den umgebenden Außenraum des Kabels dienen, wo diese Energie mit entsprechenden Antennenanlagen aufgefangen und die übermittelten Signale ausgewertet werden. Durch die Einspeisung an einem Ende ergibt sich längs des Kabels aufgrund der natürlichen Kabeldämpfung sowie der fortlaufenden Abstrahlung eine Intensitätsabnahme der abgestrahlten Leistung. Da solche Kabel vor allem in Tunneln montiert sind, um dem durchfahrenden Verkehr, wie Zügen oder Autos, die Möglichkeit zu geben, Signale von außen zu empfangen oder Signale vom Tunnelinnern nach außen weiterzugeben, sind viele Lösungen bekannt, durch Variation der Anzahl von Schlitzen, durch Veränderung der geometrischen Formen sowie durch eine bestimmte Zuordnung der Schlitze zueinander, die Intensitätsabnahme der abgestrahlten Leistung auf ein vertretbares Maß zu reduzieren (Druckschrift "Cable" der Alcatel Câble, Nummer 6, 1. Quartal 1992, Seiten 16 und 17).

Nun sind aber z. B. in einem Tunnel nicht nur die beschriebenen Hochfrequenzkabel zu montieren, auch andere Datenübertragungsstrecken werden parallel zu diesen geführt, sei es, um vorhandene Verstärkereinrichtungen zu speisen oder zu steuern, sei es, insbesondere bei langen Tunneln, um eine problemlosere Führung der Kabeltrasse zu erreichen. In neuerer Zeit gilt dies vor allem für die Datenübertragung mittels Lichtwellenleiter, die die zusätzliche Verlegung eines Kabels erfordert. Abgesehen davon, daß jede zusätzliche Kabelverlegung an einer Tunnelwandung zusätzlichen Platz erfordert, ist dort, wo Wandbefestigungen ohne weiteres nicht möglich sind, vielmehr auf Aufhängungen zurückgegriffen werden muß, mit einem erheblichen Montageaufwand zu rechnen.

Aus der GB-A-1 172 272 ist ein koaxiales Kabel bekannt, das einen Kern mit mindestens einer Glasfaser aufweist, wobei die Glasfasern von einer lichtundurchlässigen Schicht aus einem dielektrischen Kunststoff umschlossen sind. Auf den so gebildeten Kern ist ein Innenleiter durch wendelförmiges Wickeln oder Flechten aufgebracht. Über einer abstandhaltenden Isolierung ist ein geflochtener Außenleiter vorgesehen.

Aus der Druckschrift "Cable Connectors" der Firma Cable-Con A/S, Vordingborg, Dänemark, vom 1.10.1990 sind Steckverbinder zum Konfektionieren von koaxialen Hochfrequenzkabeln bekannt, wobei das Konfektionieren entweder werksseitig oder am Montageort erfolgen kann. Derartige Steckverbinder haben einen sich konzentrisch zu einer Steckerlängsachse erstreckenden und mit dem Innenleiter des Hochfrequenzkabels elektrisch verbindbaren Steckstift. In radialer Richtung mit Abstand und in axialer Richtung zumindest teilweise ist dieser Steckstift von einer Steckbuchse umgeben. Die Steckbuchse ist mit einer Spannhülse verbunden, die eine Spannvorrichtung zum Halten des Steckverbinders an einem Ende des Hochfrequenzkabels aufweist.

Der Erfindung liegt die Aufgabe zugrunde, einen einfach montierbaren Steckverbinder für im rohrförmigen Innenleiter zumindest eine optische Faser aufweisende koaxiale Hochfrequenzkabel anzugeben.

Diese Aufgabe wird gemäß der Erfindung dadurch gelöst, daß in dem Steckverbinder ein Führungskanal zum Herausführen zumindest einer in dem rohrförmigen Innenleiter des koaxialen Hochfrequenzkabels angeordneten optischen Faser vorgesehen ist und daß der Führungskanal ausgehend von dem Steckstift gegenüber der Steckerlängsachse in der Spannhülse abgewandter Richtung schräg nach außen geneigt ist.

Die mit der Erfindung erzielbaren Vorteile bestehen insbesondere in einer einfachen Konfektionierung eines kombinierten koaxialen Hochfrequenz- und Lichtwellenleiter-Kabels mit einer seitlichen Ausbringung der zumindest einen in dem Innenleiter angeordneten optischen Faser sowie einer einfachen und kostengünstigen Herstellung des Steckverbinders. Der erfindungsgemäße Steckverbinder ist sehr einfach und ohne großen Montageaufwand an ein Kabelende eines kombinierten koaxialen Hochfrequenz- und Lichtwellenleiter-Kabels montierbar. Die Hochfrequenzübertragung wird dabei durch den erfindungsgemäßen Steckverbinder nur geringfügig beeinflußt. Eine mit dem erfindungsgemäßen Steckverbinder verbindbare Kupplung zweier Kabelenden läßt sich mit herkömmlichen Hochfrequenz- bzw. Lichtwellenleiter-Verbindungselementen auf einfache Art und Weise realisieren.

Für eine besonders einfache und für die Hochfrequenzübertragung den geringsten Einfluß aufweisende Ausbildung des erfindungsgemäßen Steckverbinders ist es von Vorteil, wenn der Führungskanal sich durch den Steckstift und die Steckbuchse hindurch erstreckt.

Aus dem gleichen Grund ist es ebenfalls vorteilhaft, wenn der ringförmige Raum zwischen dem Steckstift und der Steckbuchse mit einer Isolierung ausgefüllt ist und wenn der Führungskanal sich durch diese Isolierung hindurch erstreckt.

Um den Einfluß der Ausbringung der optischen Fasern aus dem Steckverbinder auf die Hochfrequenz-Übertragung möglichst gering zu halten, ist es vorteilhaft, wenn der Steckstift und die Steckbuchse im Bereich des sich durch sie hindurch erstreckenden Führungskanals mit einem Kunststoff beschichtet sind, so daß z. B. ein in dem Führungskanal geführtes, in seinem Inneren optische Fasern aufweisendes Metallröhrchen nicht in unmittelbarem Kontakt mit der metallischen Wandung des elektrisch leitenden Steckstiftes bzw. der elektrisch leitenden Steckbuchse steht.

Die Erfindung ist anhand der in den Figuren 1 und 2 dargestellten koaxialen Hochfrequenzkabel und des in der Figur 3 als Ausführungsbeispiel der Erfindung dargestellten, mit diesen Hochfrequenzkabeln verbindbaren Steckverbinders näher erläutert.

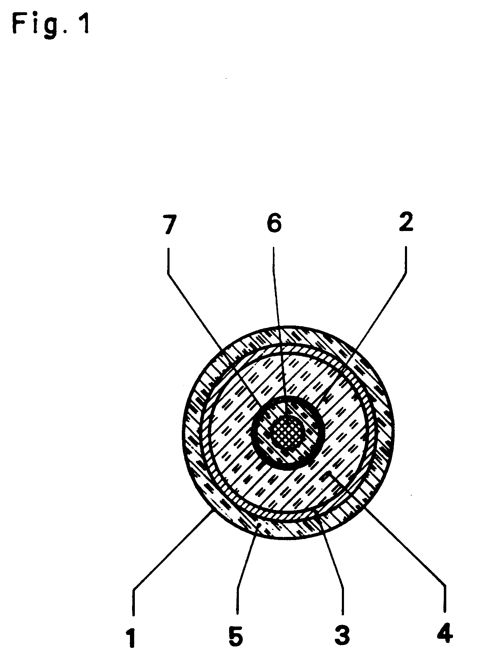

Das in der Fig. 1 dargestellte koaxiale Hochfrequenzkabel 1 besteht aus einem rohrförmigen Innenleiter 2, zu dem ein ebenfalls rohrförmiger Außenleiter 3 konzentrisch angeordnet ist. Ein den gegenseitigen Abstand von Innen- und Außenleiter bewirkendes Dielektrikum ist mit 4 bezeichnet, es kann z. B. aus einem Vollkunststoff bestehen, aus einem geschäumten Kunststoffmaterial oder auch aus einer Scheiben-Abstandshalterkonstruktion bzw. Kombinationen daraus. Der Außenleiter 3 weist z. B. eine hier nicht dargestellte Schlitzkonfiguration auf. Diese Schlitze dienen zur Abstrahlung elektromagnetischer Wellen in die Umgebung des Kabels. Ein darüber befindlicher Außenmantel 5 aus einem z. B. abriebfesten und ggf. flammfest eingestellten Kunststoff schützt das abstrahlende Hochfrequenzkabel gegen äußere mechanische Einwirkungen.

Zur gleichzeitigen optischen Datenübertragung enthält der Innenleiter 2 optische Fasern, im dargestellten Ausführungsbeispiel in Form eines gesonderten Lichtwellenleiterelementes 6. Dieses Lichtwellenleiterelement 6 kann eine Hohl-, Bündel- oder Festader sein, ebenso kann es aber auch ein Stapel aus einer Anzahl Bändchen sein, die wiederum einzelne optische Fasern, z. B. durch Kunststoffolien fixiert, enthalten. Umschlossen wird das Lichtwellenleiterelement 6 von einer z. B. aus Polyethylen bestehenden Hülle 7. Diese kann gleichzeitig eine Wärmedämmfunktion bei der Herstellung des abstrahlenden Hochfrequenzkabels übernehmen, wenn die nachfolgenden Kunststoffschichten extrudiert werden. Wärmedämmung insbesondere gegenüber den im Innern befindlichen optischen Fasern, um diese vor dem Einfluß erhöhter Temperaturen zu schützen. Inwieweit diese Hülle 7 als Wärmedämmschicht zum Tragen kommt oder kommen muß und daher entsprechend auszubilden ist, hängt von dem Wärmeinhalt der weiteren Dielektrika ab, aber auch von den Verarbeitungstemperaturen der hierfür vorgesehenen Kunststoffmaterialien.

Durch die erwähnte Möglichkeit, das zwischen Innenleiter 2 und Außenleiter 3 befindliche Dielektrikum 4 beliebig auszubilden, ist bei diesem koaxialen Hochfrequenzkabel die Integration des optischen Übertragungsweges völlig unabhängig von dem sonstigen Kabelaufbau.

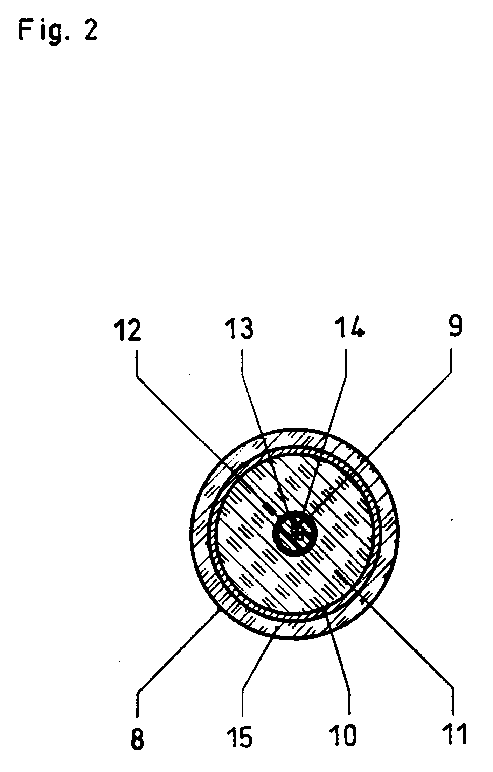

Das in der Fig. 2 dargestellte koaxiale Hochfrequenzkabel 8 weist einen rohrförmigen Innenleiter 9 und einen konzentrisch zu diesem angeordneten Außenleiter 10 auf. Innenleiter 9 und Außenleiter 10, beide rohrförmig ausgebildet, sind durch das Dielektrikum 11 voneinander getrennt, d. h. elektrisch isoliert. Im dargestellten Ausführungsbeispiel besteht dieses Dielektrikum 11 beispielsweise aus einem geschäumten Polyethylen, das auf den Innenleiter 9 aufextrudiert ist. Das Dielektrikum 11 kann aber auch als Abstandshalterwendel, als Scheibenisolierung oder dergleichen aufgebaut sein.

Der Innenleiter 9 ist identisch mit dem Mantelrohr eines optischen Lichtwellenleiterelementes 12, in diesem Fall gebildet durch ein mit einer Überlänge von mehr als 5 ‰ lose im Innenleiter (Mantelrohr) 9 befindliches Bündel aus optischen Fasern 13 sowie eine hier beispielhaft verwendete Dichtmasse 14 aus einem mindestens während der Herstellung fließfähigen polymeren Material. Der Außenleiter 10, in der Anwendung bei sogenannten abstrahlenden Hochfrequenzkabeln mit einer bestimmten Schlitz- oder Lochkonfiguration versehen, ist umgeben von einem Außenmantel 15 als mechanischer Schutz, der durch entsprechende Einstellung der hierfür verwendeten Kunststoffmischung abriebfest, aber auch flammfest sein kann.

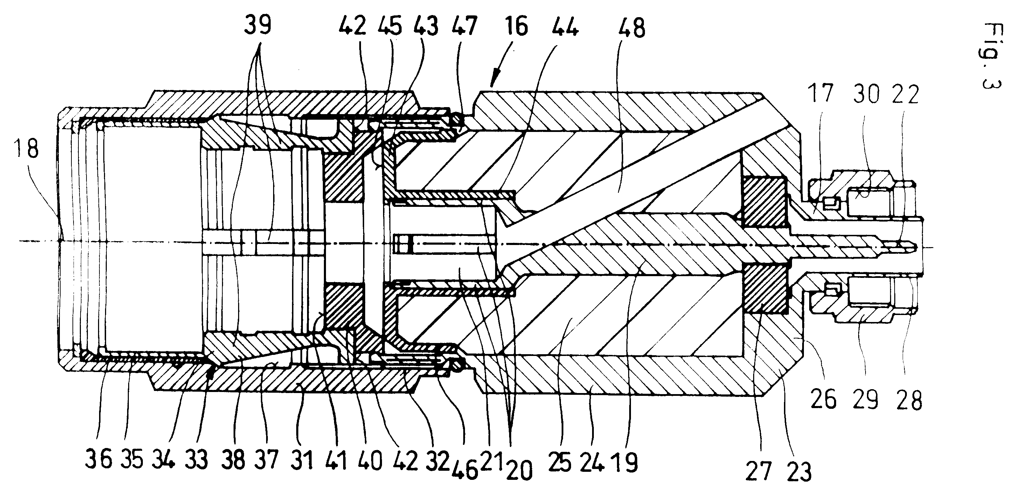

Der in der Figur 3 beispielhaft dargestellte Steckverbinder zur Konfektionierung eines kombinierten koaxialen Hochfrequenz- und Lichtwellenleiterkabels, das einen rohrförmigen Innenleiter mit zumindest einer unmittelbar im Innenleiter oder in einem gesonderten Lichtwellenleiterelement im Innenleiter angeordneten optischen Faser und einen Außenleiter aufweist, ist mit 16 bezeichnet. Der Steckverbinder 16 weist einen sich konzentrisch zu einer Steckerlängsachse 18 bis zu einem Ende 17 des Steckverbinders erstreckenden Steckstift 19 auf. Der Steckstift 19 ist an seinem dem Ende 17 des Steckverbinders 16 abgewandten Ende mit dem Innenleiter des kombinierten koaxialen Hochfrequenz- und Lichtwellenleiter-Kabels verbindbar. Zu diesem Zweck weist der Steckstift 19 an diesem Ende beispielsweise vier sich dem Ende 17 des Steckverbinders 16 abgewandt erstreckende Kontaktzungen 20 auf, die annähernd einen Kreisring bilden. In eine von den Kontaktzungen 20 umgebene, etwa zylindrische Aufnahme 21 ist der rohrförmige Innenleiter des zu kontaktierenden, vor dem Einschieben in den Steckverbinder 16 abgesetzten koaxialen Hochfrequenzkabels einschiebbar. Die Kontaktzungen 20 sind beispielsweise in radialer Richtung nach innen vorgespannt, so daß sie fest an dem Umfang des rohrförmigen Innenleiters anliegen und auf diese Weise eine gute elektrische Kontaktierung des Innenleiters ermöglichen. An dem Ende 17 des Steckverbinders 16 weist der Steckstift 19 z. B. konzentrisch zu der Steckerlängsachse 18 ein stiftförmiges erstes elektrisches Kontaktelement 22 auf.

Der Steckstift 19 ist in radialer Richtung mit Abstand und in axialer Richtung zumindest teilweise, bei dem dargestellten Ausführungsbeispiel über seine gesamte Länge von einer rohrförmigen, beispielsweise konzentrisch zu der Steckerlängsachse 18 verlaufenden Steckbuchse 23 umgeben. In radialer Richtung zwischen einem dem Ende 17 des Steckverbinders 16 abgewandten Zylinderabschnitt 24 der Steckbuchse 23 und dem Umfang des Steckstiftes 19 ist ein kreisringförmiger Raum gebildet, der beispielsweise mit einer Isolierung 25 ausgefüllt ist. Dem Kontaktelement 27 des Steckstiftes 19 zugewandt weist die Steckbuchse 23 ausgehend von ihrem Zylinderabschnitt 24 einen sich in radialer Richtung nach innen erstreckenden Zwischenabschnitt 26 auf, der bis nahe an den Umfang des Steckstiftes 19 reicht. In radialer Richtung zwischen dem Steckstift 19 und dem Zwischenabschnitt 20 der Steckbuchse 23 ist ein ringförmiger, elektrisch isolierender Abstandshalter 27 angeordnet, der sowohl an der Wandung der Steckbuchse 23 als auch an dem Umfang des Steckstiftes 19 anliegt und auf diese Weise Steckstift 19 und Steckbuchse 23 zueinander zentriert. An dem Ende 17 des Steckverbinders 16 erstreckt sich anschließend an den Zwischenabschnitt 26 parallel und mit Abstand zu dem ersten Kontaktelement 22 des Steckstiftes 19 z. B. konzentrisch zu der Steckerlängsachse 18 ein ringförmiges zweites elektrisches Kontaktelement 28 der Steckbuchse 23. Mit dem Kontaktelement 28 der Steckbuchse 23 ist ein ringförmiges Befestigungsteil 29 verbunden, das beispielsweise mit einem Innengewinde 30 versehen ist. Dieses Innengewinde 30 dient zur Verbindung des Steckverbinders 16 z. B. mit einer Kupplung oder einer Anschlußbuchse eines Gerätegehäuses.

An ihrem dem zweiten Kontaktelement 28 abgewandten Ende des Zylinderabschnittes 24 ist die Steckbuchse 23 mit einem Ende einer rohrförmigen Spannhülse 31 mittels einer Verschraubung 32 verbunden. In der Spannhülse 31 ist eine Spannvorrichtung 33 mit einem Spannelement 34 angeordnet, die zum Halten des Steckverbinders 16 an dem zu konfektionierenden kombinierten koaxialen Hochfrequenz- und Lichtwellenleiter-Kabel sowie zur elektrischen Kontaktierung des Außenleiters des Kabels dient. Das rohrförmig ausgebildete Spannelement 34 ist an einem der Steckbuchse 23 abgewandten Zylinderabschnitt 35 mittels eines zylindrischen Klemmelementes 36 in einer Längsbohrung 37 der rohrförmigen Spannhülse 31 festgeklemmt und weist der Steckbuchse 23 zugewandt einen Kontaktbereich 38 mit einer verringerten lichten Weite auf. Wird ein in geeigneter Weise abgesetztes kombiniertes koaxiales Hochfrequenz- und Lichtwellenleiter-Kabel in den Steckverbinder 16 eingeführt, so wird der Außenleiter des Kabels durch beispielsweise vier Kontaktstreifen 39 des Kontaktbereiches 38 des Spannelementes 34 elektrisch kontaktiert. Die Kontaktstreifen 39 bilden dabei beispielsweise annähernd die Form eines Kreisringes und sind in radialer Richtung nach innen federnd ausgebildet, so daß sie an dem Umfang des Außenleiters anliegen. An ihren dem Steckstift 19 zugewandten Enden ist die Verformung der Kontaktstreifen 39 bzw. ihre Lage in radialer Richtung nach innen durch den Umfang eines ringförmigen Zwischenteils 40 begrenzt. Mit seiner dem Steckstift 19 abgewandten Stirnseite 41 dient das Zwischenteil 40 beispielsweise als axiale Anlage für eine abgesetzte Stufe des Kabels. Das Zwischenteil 40 liegt in axialer Richtung an der Steckbuchse 23 zugewandten Stirnseiten 42 der Kontaktstreifen 39 z. B. nahe der Verschraubung 32 an. Über die Kontaktstreifen 39 des Spannelementes 34, die Spannhülse 31, die Verschraubung 32 und die Steckbuchse 23 steht der Außenleiter des Kabels mit dem zweiten Kontaktelement 28 in elektrisch leitender Verbindung.

Über den Umfang des Steckstiftes 19 ist im Bereich seiner Kontaktzungen 20 eine Steckhülse 43 mit ihrem ersten Zylinderabschnitt 44 aufgeschoben. Die Steckhülse 43 stützt sich mit einer dem Zwischenteil 40 zugewandten, in radialer Richtung ausgehend von dem ersten Zylinderabschnitt 44 nach außen verlaufenden ringförmigen Radialabschnitt 45 an der Isolierung 25 zwischen dem Steckstift 19 und der Steckbuchse 23 ab. An dem Umfang eines sich ausgehend von dem Radialabschnitt 45 in axialer Richtung in Richtung des zweiten Kontaktelementes 28 erstreckenden zweiten Zylinderabschnittes 46 liegt die Steckhülse 43 an der Wandung des Zylinderabschnittes 24 der Steckbuchse 23 sowie in axialer Richtung dem Kontaktelement 28 zugewandt an einem in radialer Richtung nach innen weisenden Halteabsatz 47 des Zylinderabschnitts 24 an.

Ausgehend von dem der Spannvorrichtung 33 abgewandten Ende der Aufnahme 21 des Steckstiftes 19 für den Innenleiter des kombinierten koaxialen Hochfrequenz- und Lichtwellenleiter-Kabels ist in dem Steckverbinder 16 ein durchgehender Führungskanal 48 vorgesehen. Der Führungskanal 48 erstreckt sich gegenüber der Steckerlängsachse 18 in den Kontaktelementen 22 und 28 zugewandter Richtung schräg nach außen geneigt durch den Steckstift 19, die Isolierung 25 sowie die Wandung der Steckbuchse 23 hindurch. Der Führungskanal 48 dient zum seitlichen Herausführen zumindest eines in dem rohrförmigen Innenleiter des kombinierten koaxialen Hochfrequenz- und Lichtwellenleiter-Kabels angeordneten Lichtwellenleiter-Elementes bzw. zumindest einer in dem Innenleiter angeordneten optischen Faser aus dem Steckverbinder 16, so daß mit dem erfindungsgemäßen Steckverbinder 16 sehr einfach ein solches kombiniertes Kabel konfektioniert werden kann. Dabei ist der Führungskanal 48 an seiner Wandung im Bereich des Steckstiftes 19 und der Steckbuchse 23 beispielsweise mit einem Kunststoff beschichtet. Auf diese Weise wird ein elektrischer Kurzschluß zwischen dem Steckstift 19 und der Steckbuchse 23 auch dann vermieden, wenn z. B. die optischen Fasern in einem metallischen Röhrchen in dem rohrförmigen Innenleiter des Hochfrequenzkabels angeordnet sind.

## Patentansprüche

1. Steckverbinder zum Konfektionieren eines einen rohrförmigen metallischen Innenleiter mit zumindest einer in dem Innenleiter angeordneten optischen Faser und einen rohrförmigen metallischen Außenleiter aufweisenden koaxialen Hochfrequenzkabels, der einen sich konzentrisch zu einer Steckerlängsachse erstreckenden Steckstift, eine diesen in radialer Richtung mit Abstand und in axialer Richtung zumindest teilweise umgebende Steckbuchse und eine mit der Steckbuchse verbundene Spannhülse zum Halten des Steckverbinders an einem Ende des Hochfrequenzkabels aufweist, dadurch gekennzeichnet, daß in dem Steckverbinder (16) ein Führungskanal (48) zum Herausführen zumindest einer in dem rohrförmigen Innenleiter (2; 9) des koaxialen Hochfrequenzkabels (1; 8) angeordneten optischen Faser (13) vorgesehen ist und daß der Führungskanal (48) ausgehend von dem Steckstift (19) gegenüber der Steckerlängsachse (18) in der Spannhülse (31) abgewandter Richtung schräg nach außen geneigt ist.

2. Steckverbinder nach Anspruch 1, dadurch gekennzeichnet, daß der Führungskanal (48) sich durch den Steckstift (19) und die Steckbuchse (23) hindurch erstreckt.

3. Steckverbinder nach Anspruch 1 oder 2, dadurch gekennzeichnet, daß der ringförmige Raum zwischen dem Steckstift (19) und der Steckbuchse (23) mit einer Isolierung (25) ausgefüllt ist und daß der Führungskanal (48) sich durch diese Isolierung (25) hindurch erstreckt.

4. Steckverbinder nach einem der Ansprüche 1 bis 3, dadurch gekennzeichnet, daß der Steckstift (19) und die Steckbuchse (23) im Bereich des sich durch sie hindurch erstreckenden Führungskanals (48) mit einem Kunststoff beschichtet sind.
